(19)

Europäisches Patentamt
European Patent Office
Office européen des brevets

(11)  **EP 4 610 767 B1**

(12)  **EUROPEAN PATENT SPECIFICATION**

(45) Date of publication and mention
of the grant of the patent:
**17.06.2026  Bulletin 2026/25**

(21) Application number: **24209986.9**

(22) Date of filing: **30.10.2024**

(51) International Patent Classification (IPC):
**G05F 1/67** *(2006.01)*

(52) Cooperative Patent Classification (CPC):
**G05F 1/67;** Y02E 10/56

(54)  **QUICK MPPT METHOD, SYSTEM AND DEVICE BASED ON UNIPOLAR INVERTER CIRCUIT**

SCHNELLES MPPT-VERFAHREN, SYSTEM UND VORRICHTUNG AUF BASIS EINER UNIPOLAREN WECHSELRICHTERSCHALTUNG

PROCÉDÉ MPPT RAPIDE, SYSTÈME ET DISPOSITIF BASÉS SUR UN CIRCUIT INVERSEUR UNIPOLAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **28.02.2024  CN 202410220212**

(43) Date of publication of application:
**03.09.2025  Bulletin 2025/36**

(73) Proprietor: **Hamedata Technology Co., Limited
Shenzhen, Guangdong 518118 (CN)**

(72) Inventors:
• **Xie, Kunlin
Shenzhen, 518118 (CN)**
• **Xie, Zhen
Shenzhen, 518118 (CN)**
• **Tang, Yutao
Shenzhen, 518118 (CN)**
• **Xie, Le
Shenzhen, 518118 (CN)**

(74) Representative: **Lin Chien, Mon-Yin
Gloria Fuertes 1, 2° D
28342 Valdemoro Madrid (ES)**

(56) References cited:
**CN-A- 108 448 638     CN-A- 115 693 776**

## Description

## TECHNICAL FIELD

The invention relates to the technical field of battery formation and grading, in particular to a quick MPPT method, system and device based on a unipolar inverter circuit.

## BACKGROUND

With the progress of science and technology, existing maximum power point tracking (MPPT) control methods include a constant-voltage method, disturbance observation method, conductance increment method, fuzzy control method and the like. These traditional methods are easy to implement and moderate in display accuracy, and allow an operating point to oscillate around a maximum power point. However, these methods are slow and inapplicable to conditions that change quickly. In a case where light changes quickly, the MPP cannot be tracked in real time, leading to a loss of energy.

In a photovoltaic inverter circuit, a MPPT algorithm can provide a reference voltage. Generally, the photovoltaic-side voltage is controlled by means of an inner voltage loop, and it often takes multiple periods to complete tracking speed regulation. If an open loop is used for calculating and regulating the tracking speed, a calculation result will be different from an actual result due to circuit errors, thus failing to realize perfect tracking.

Chinese patent CN115693776A (referred to as D1) discloses a maximum power point tracking (MPPT) control method for a photovoltaic grid-connected system. The method is mainly based on a perturb and observe (P&O) algorithm. By periodically perturbing a reference voltage and comparing the direction of power change before and after the perturbation, the current operating state is determined as to whether it is close to the maximum power point, thereby continuously adjusting the reference voltage to approach the optimal point. However, this method is essentially an open-loop perturbation control structure, which has problems such as steady-state oscillation, slow response speed, and susceptibility to noise interference. In particular, it cannot accurately and quickly lock the maximum power point under dynamic changes or severe illumination fluctuations.

Chinese patent CN108448638 (referred to as D2) discloses a photovoltaic grid-connected control method based on a unipolar inverter. The method mainly focuses on the control of grid-connected current and the synthesis of rectified waveforms. It achieves the grid-connected objective by setting a target current waveform and designing a current controller. However, D2 does not involve the implementation of a maximum power point tracking strategy. Its system objective is waveform reconstruction and grid-connected stability, and it does not construct a control path targeting maximum output power, nor does it propose a technical solution for dynamically back-calculating a reference voltage based on sampled voltage and current values. Therefore, although this solution is applicable to general grid-connected control scenarios, there is still a technical gap in applications that require fast and accurate maximum power point tracking.

## SUMMARY

The objective of the invention is to provide a quick MPPT method, system and device based on a unipolar inverter circuit to realize the purpose of a low calculation quantity and a high response speed based on the features of the unipolar inverter circuit.

To fulfill the above purpose, the invention provides the following technical solution:
A quick MPPT method based on a unipolar inverter circuit,, comprising the following steps:

S1:initializing MPPT control parameters;the MPPT control parameters comprise a photovoltaic-side reference voltage Vref and a power coefficient k;

S2:triggering a sampling operation when a sampling condition is satisfied in each calculation period, and recording photovoltaic-side data in a current calculation period;the sampling condition is that the grid phase is an integral multiple of 45°;and the photovoltaic-side data comprise a photovoltaic-side voltage Vnow and/or power Pnow;The calculation period is one half-wave cycle of the grid voltage;

S3:when a grid phase satisfies a calculation condition, comparing by calculation a voltage in the current calculation period with a voltage in a previous calculation period, and determining a power compensation factor according to a comparison result; the calculation condition is that the grid phase is 0° and/or 180°;in a case where a photovoltaic-side voltage Vnow in the current calculation period is lower than a reference voltage in the previous period, setting the power compensation factor as a first power compensation factor; or

in a case where the voltage in the current calculation period is higher than the reference voltage in the previous period, setting the power compensation factor as a second power compensation factor, wherein the first power compensation factor is less than the second power compensation factor;and

S4:determining an output power and/or a reference voltage according to the power compensation factor and a power calculation strategy, and controlling an inverter power in the current calculation period according to the output power;

the step of determining an output power and/or a reference voltage according to the power compensation factor and a power calculation strategy comprises:

S41:setting the reference voltage as a voltage corresponding to a maximum power point in every four sampling points, and calculating a first output power according to an output power calculation formula; and

S42:determining whether the first output power satisfies a power output requirement; if the first output power satisfies the power output requirement, directly outputting the first output power; the power output requirement is that the first output power is higher than a maximum output power or is lower than 0;or,

S421:if the first output power does not satisfy the power output requirement, in a case where the first output power is higher than the maximum output power, determining the reference voltage according to a first reference voltage calculation formula, and determining the second output power as the maximum output power; or

S422:in a case where the first output power is lower than 0, determining the reference voltage according to a second reference voltage calculation formula, and determining the second output power as 0;

the output power calculation formula is:

$$P_{out}=k \times (P_{now}-(V_{ref}{}^2-V_{now}{}^2) \times \frac{C}{T})$$

where, Pout is the first output power, Vnow is the photovoltaic-side voltage in the current calculation period, C is a photovoltaic-side input capacitance, T is the calculation period, k is the power compensation factor, Pnow is a power in the current calculation period, and Vref is the reference voltage;

the first reference voltage calculation formula is:

$$V_{ref}=\sqrt{V_{now}{}^2-\left(\frac{P_{max}}{k}-P_{now}\right) \times \frac{T}{C}}$$

where, Vnow is the photovoltaic-side voltage in the current calculation period, C is the photovoltaic-side input capacitance, T is the calculation period, k is the power compensation factor, Pnow is the power in the current calculation period, Pmax is the maximum output power, and Vref is the reference voltage;

the second reference voltage calculation formula is:

$$V_{ref}=\sqrt{V_{now}{}^2+P_{now} \times \frac{T}{C}}$$

where, Vnow is the photovoltaic-side voltage in the current calculation period, C is the photovoltaic-side input capacitance, T is the calculation period, Pnow is the power in the current calculation period, and Vref is the reference voltage..

In a second aspect, the invention further provides a quick MPPT system based on a unipolar inverter circuit, comprising a unipolar inverter circuit and a controller, wherein the controller implements the quick MPPT method based on a unipolar inverter circuit described above.

In a third aspect, the invention further provides a quick MPPT device based on a unipolar inverter circuit, comprising:

a memory storing executable program codes; and

a processor coupled with the memory;

wherein, the processor invokes the executable program codes stored in the memory to implement the quick MPPT method based on a unipolar inverter circuit described above.

Compared with the prior art, the invention has the following beneficial effects:

1. The quick MPPT method, system and device based on a unipolar inverter circuit provided by the invention have a high MPPT speed and can update parameters every ten grid periods, and generally, the voltage can approximate to the maximum power point within ten grid periods, such that the tracking speed is increased greatly.

2. The algorithm is simple, and the sampling frequency is low. In each calculation period, only sampling and fourth times of data calculation are needed, such that the internal memory of a digital power supply is saved, and the calculation quantity is greatly reduced.

3. Under the disturbance of the power compensation factor, the voltage will fluctuate in the vicinity of the reference voltage when quickly approximating to the maximum power point, and finally will converge to an optimal solution.

## BRIEF DESCRIPTION OF THE DRAWINGS

FIG. 1 is a schematic diagram of a unipolar inverter circuit according to one embodiment of the invention;

FIG. 2 is a schematic diagram of a photovoltaic-side voltage and a grid voltage according to one embodiment of the invention;

FIG. 3 is a flow diagram according to one embodiment of the invention.

## DETAILED DESCRIPTION OF THE EMBODIMENTS

The technical solutions in the embodiments of the invention are clearly and completely described below in conjunction with accompanying drawings of these embodiments. Obviously, the embodiments in the following description are merely illustrative ones, and are not all possibles ones of the invention. All other embodiments obtained by those ordinarily skilled in the art based on the following ones without creative labor should also fall within the protection scope of the invention.

The terms "comprise" and "provided with" and any variants thereof in the embodiments of the invention are intended to indicate non-exclusive inclusion. For example, a process, method, system, product or device comprising a series of steps or modules is not definitely limited to the steps or modules that are clearly listed and may also comprise other inherent steps or modules, that are not clearly listed, of the process, method, product or device.

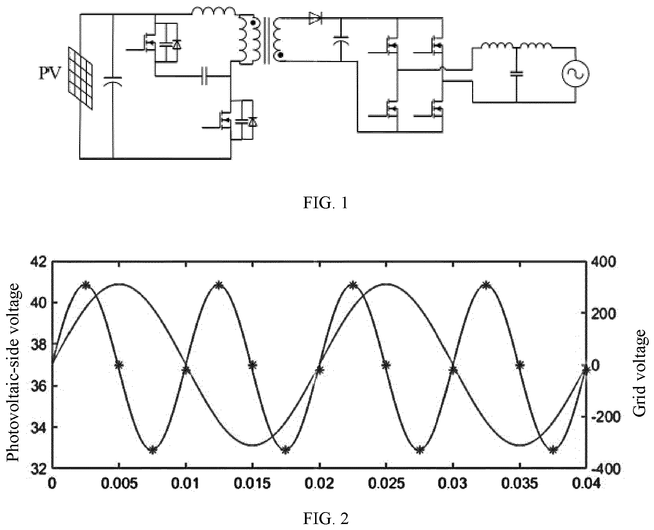

The application provides a quick MPPT method based on a unipolar inverter circuit. The photovoltaic-side power of the unipolar inverter circuit is directly accessed to a grid without an intermediate decoupling capacitor, such that ripples of an output power will be directly reflected a photovoltaic-side capacitor. With a flyback inverter circuit in FIG. 1 as an example, the application may be implemented actually by means of various circuits, including the flyback inverter circuit, a high-voltage full-bridge inverter circuit, a T-type three-level circuit or other circuits without a substantial high-voltage bus at the photovoltaic pre-stage. The relation between the photovoltaic-side voltage and the grid voltage is shown in FIG. 2. By detecting the disturbance of the capacitor voltage, one time of MPPT is completed within half grid period.

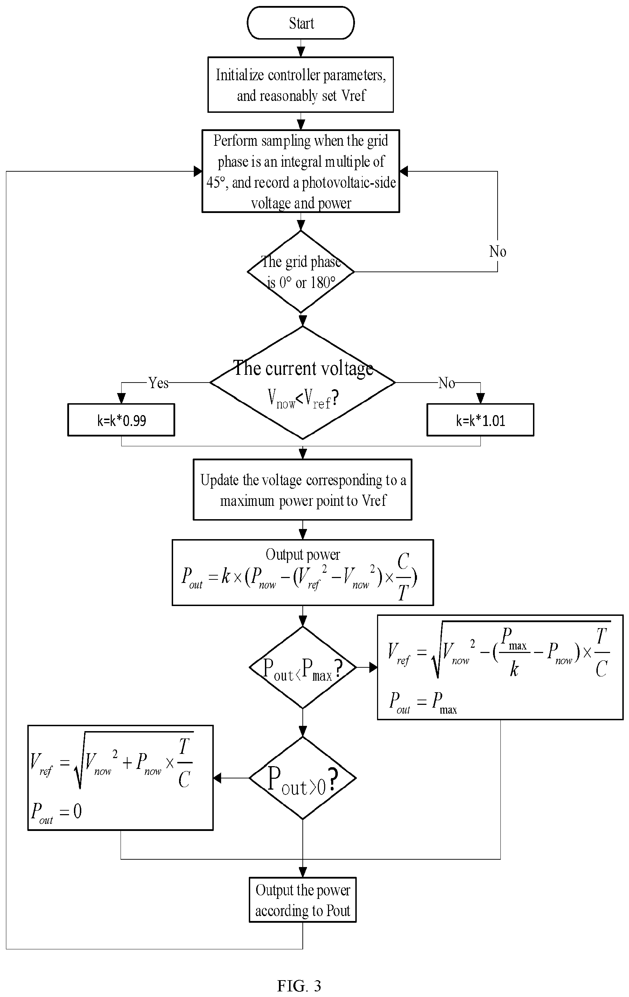

As shown in FIG. 3, the quick MPPT method based on a unipolar inverter circuit comprises the following steps:
S1: initializing MPPT control parameters.

The MPPT control parameters comprise a photovoltaic-side reference voltage $V_{ref}$ and a power coefficient $k$ which are set reasonably, for example, the photovoltaic-side reference voltage $V_{ref}$ is set as 85% of a photovoltaic open-circuit voltage. The MPPT voltage of a photovoltaic panel is generally 70%-85% of the open-circuit voltage, and in the application, a minimum open-circuit voltage is selected to be initialized.

S2: triggering a sampling operation when a sampling condition is satisfied in each calculation period, and recording photovoltaic-side data in a current calculation period, wherein the photovoltaic-side data comprise a voltage and/or a power.

The sampling condition is that a grid phase is an integral multiple of 45°, sampling is triggered when the grid phase is an integral multiple of 45°, and a corresponding photovoltaic-side voltage and power are recorded. By simplifying the sampling and calculation process, only the voltage and power in the case where the grid phase is an integral multiple of 45° are sampled. As shown in FIG. 2, points marked by red dots are sampling points. For example, within half grid period, the photovoltaic (PV)-side volage has a maximum value and a minimum value when the grid phase is 45° and 135°, and the photovoltaic-side reference voltage is determined according to P-V characteristics of the photovoltaic panel.

During sampling, first the grid phase is obtained by a phase-locked loop; and when the grid phase reaches an integral multiple of 45°, the photovoltaic-side voltage and current at the current moment are sampled by means of a single-chip microcomputer, and the power is calculated.

S3: when the grid phase satisfies a calculation condition, comparing by calculation a voltage in the current calculation period with a voltage in a previous calculation period, and determining a power compensation factor according to a comparison result.

The calculation condition is that the grid phase is 0° and/or 180°. In the application, calculation is performed respectively when the grid phase is 0° and 180° to obtain a relation between the voltage in the current calculation period and the reference voltage.

The greater the power compensation factor, the quicker the convergence, and the greater the oscillation in a steady state. The smaller the power compensation factor, the slower the convergence, and the smaller the oscillation in the steady state. The range of the power compensation factor is related to a P-V curve of the photovoltaic panel, an input capacitance C, a power update period T and an inverter power P.

In the P-V curve, a voltage $V_{mppt}$ corresponding to a maximum power point $P_{mppt}$ of the photovoltaic panel satisfies that the power corresponding to $V_{mppt} \pm \Delta V$ is higher than $99.5\% * P_{mppt}$, and a maximum oscillating voltage corresponding to the maximum power point is limited by this condition. The oscillating voltage satisfies

$$\Delta V = \sqrt{\frac{\Delta k \times P \times T + V_{pv}}{C} - V_{p_V}}$$ , and a higher convergence rate or a lower oscillating voltage can be obtianed by modifying the value of the power compensation factor k.

Therefore, the step of comparing by calculation a voltage in the current calculation period with a voltage in a previous calculation period, and determining a power compensation factor according to a comparison result comprises:

in a case where the voltage $V_{now}$ in the current calculation period is lower than a reference voltage $V_{ref}$ in the previous period, setting the power compensation factor as a first power compensation factor; or

in a case where the voltage $V_{now}$ in the current calculation period is higher than the reference voltage $V_{ref}$ in the previous period, setting the power compensation factor as a second power compensation factor, wherein the first power compensation factor is less than the second power compensation factor.

Illustratively, in the application, in a case where the voltage $V_{now}$ in the current calculation period is lower than the reference voltage $V_{ref}$ in the previous period, the power compensation factor k is set as a first power compensation factor, $k=k*0.99$; or
in the application, in a case where the voltage $V_{now}$ in the current calculation period is higher than the reference voltage $V_{ref}$ in the previous period, the power compensation factor k is set as a second power compensation factor, $k=k*1.01$.

The power compensation factor k is adjusted according to feedback of the output voltage, so as to realize compensation of the output power and disturbance of the photovoltaic-side voltage. The oscillation amplitude and the convergence rate can be controlled by adjusting the power compensation factor.

S4: determining an output power and/or a reference voltage according to the power compensation factor and a power calculation strategy, and controlling an inverter power in the current calculation period according to the output power.

The step of determining an output power and/or a reference voltage according to the power compensation factor and a power calculation strategy comprises:

S41: setting the reference voltage as a voltage corresponding to a maximum power point in every four sampling points, and calculating a first output power according to an output power calculation formula;

wherein, the output power calculation formula is:

$$P_{out}=k\times(P_{now}-(V_{ref}^2-V_{now}^2)\times\frac{C}{T})$$

where, $P_{out}$ is the first output power, $V_{now}$ is the voltage in the current calculation period, C is a photovoltaic-side input capacitance, $T$ is the calculation period, $k$ is the power compensation factor, $P_{now}$ is a power in the current calculation period, and $V_{ref}$ is the reference voltage; and

S42: determining whether the first output power satisfies a power output requirement; if the first output power satisfies the power output requirement, directly outputting the first output power; or, if the first output power does not satisfy the power output requirement, determining a second output power and/or the reference voltage according to the power calculation strategy.

Further, the power output requirement is that the first output power is higher than a maximum output power or is lower than 0. If the first output power calculated by MPPT is higher than the maximum output power, an output calculation result will be different from an actual result, leading to a deviation of the power compensation factor. Therefore, the current output power of an inverter is calculated by means of an open loop, and based on the maximum power of the inverter, the current reference voltage is inferred reversely according to $C*U_{now\_pv}^2=C*U_{old\_pv}^2-P_{out}*T+P_{pv}*T$.

Therefore, in S42, determining a second output power and/or the reference voltage according to the power calculation strategy comprises:

S421: in a case where the first output power is higher than the maximum output power, determining the reference voltage according to a first reference voltage calculation formula, and determining the second output power as the maximum output power;

wherein, the first reference voltage calculation formula is:

$$V_{ref}=\sqrt{V_{now}^2-(\frac{P_{max}}{k}-P_{now})\times\frac{T}{C}}$$

where, $V_{now}$ is the voltage in the current calculation period, C is the photovoltaic-side input capacitance, $T$ is the calculation period, $k$ is the power compensation factor, $P_{now}$ is the power in the current calculation period, $P_{max}$ is the maximum output power, and $V_{ref}$ is the reference voltage; and

S422: in a case where the first output power is lower than 0, determining the reference voltage according to a second reference voltage calculation formula, and determining the second output power as 0;

wherein, the second reference voltage calculation formula is:

$$V_{ref} = \sqrt{V_{now}{}^2 + P_{now} \times \frac{T}{C}}$$

where, $V_{now}$ is the voltage in the current calculation period, C is the photovoltaic-side input capacitance, T is the calculation period, $P_{now}$ is the power in the current calculation period, and $V_{ref}$ is the reference voltage.

The current output power of the inverter is calculated by means of an open loop, and the current reference voltage is inferred according to according to $C*U_{now\_pv}{}^2 = C*U_{old\_pv}{}^2 - P_{out}*T + P_{pv}*T$. If the power calculated by MPPT is higher than the maximum power, the current reference voltage should be inferred reversely according to the maximum power of the inverter; otherwise, the calculation result will be different from the actual result, leading to a deviation of the power compensation factor $k$.

The inverter power in the calculation period is controlled according to the output power, that is, the reference current of the grid is generated according to the output power Pout, and the inverter power is controlled by means of a current loop. Compared with traditional algorithms, the MPPT side will no longer directly output a reference voltage and directly outputs an output power compensated by the power compensation factor. In a single-stage circuit, closed-loop voltage control performs voltage control at the power frequency, and it takes multiple periods to reach a specified power. By performing calculation according to the output power, the calculation time can be shortened, and a calculation error and a deviation of an actual circuit value are compensated during MPPT.

Based on the same inventive concept, the application provides a quick MPPT system based on a unipolar inverter circuit, comprising a unipolar inverter circuit and a controller, wherein the controller implements the quick MPPT method based on a unipolar inverter circuit described above.

The processing method of the system may be understood with reference to the description of the above method and will not be repeated here.

The application further provides a quick MPPT device based on a unipolar inverter circuit, comprising:

a memory storing executable program codes; and

a processor coupled with the memory;

wherein, the processor invokes the executable program codes stored in the memory to implement the quick MPPT method based on a unipolar inverter circuit described above.

One embodiment of the application further provides a non-transient machine-readable storage medium, wherein an executable program is stored in the non-transient machine-readable storage medium, and when the executable program is executed by a processor, the processor implements the processing method provided in the above embodiment.

One embodiment of the application discloses a computer-readable storage medium, storing a computer program used for electronic data exchange, wherein the computer program enables a computer to implement the quick MPPT method based on a unipolar inverter circuit described above.

One embodiment of the invention discloses a computer program product, wherein the compute program product stores a non-transient computer-readable storage medium, and the computer program is operable to enable a computer to implement the quick MPPT method based on a unipolar inverter circuit described above.

The embodiments described above are merely illustrative ones, where modules expounded as separate components may be or may be not physically separated, and components displayed as modules may be or may be not physical modules and may be located in a same place or distributed on multiple network modules. The purposes of the technical solutions in the embodiments may be fulfilled using all or part of modules as actually needed. Those ordinarily skilled in the art can understand and implement the invention without creative labor.

With reference to the specific description of the above embodiment, those skilled in the art can clearly understand that the embodiments of the invention may be implemented by means of software and a necessary general-purpose hardware platform or by means of hardware. Based on such an understanding, the above technical solutions or parts, that make a contribution to the prior art, may be embodied in the form of a software product, which may be stored in a computer-readable storage medium, including a read-only memory (ROM), a random access memory (RAM), a programmable read-only memory (PROM), an erasable programmable read only memory (EPROM), a one-time programmable read-only memory (OTPROM), an electrically-erasable programmable read-only memory (EEPROM), a compact disc read-only memory (CD-ROM), other optical disk memories, magnetic disk memories, magnetic tape memories, or other any computer-readable media used for carrying or storing data.

**Claims**

1. A quick MPPT method based on a unipolar inverter circuit, **characterized in that**, comprising the following steps:

S1: initializing MPPT control parameters;the MPPT control parameters comprise a photovoltaic-side reference voltage $V_{ref}$ and a power coefficient $k$;

S2: triggering a sampling operation when a sampling condition is satisfied in each calculation period, and recording photovoltaic-side data in a current calculation period;the sampling condition is that the grid phase is an integral multiple of 45°;and the photovoltaic-side data comprise a photovoltaic-side voltage $V_{now}$ and/or power $P_{now}$;The calculation period is one half-wave cycle of the grid voltage;

S3: when a grid phase satisfies a calculation condition, comparing by calculation a voltage in the current calculation period with a voltage in a previous calculation period, and determining a power compensation factor according to a comparison result; the calculation condition is that the grid phase is 0° and/or 180°;in a case where a photovoltaic-side voltage $V_{now}$ in the current calculation period is lower than a reference voltage in the previous period, setting the power compensation factor as a first power compensation factor; or

in a case where the voltage in the current calculation period is higher than the reference voltage in the previous period, setting the power compensation factor as a second power compensation factor, wherein the first power compensation factor is less than the second power compensation factor;and

S4: determining an output power and/or a reference voltage according to the power compensation factor and a power calculation strategy, and controlling an inverter power in the current calculation period according to the output power;

the step of determining an output power and/or a reference voltage according to the power compensation factor and a power calculation strategy comprises:

S41: setting the reference voltage as a voltage corresponding to a maximum power point in every four sampling points, and calculating a first output power according to an output power calculation formula; and

S42: determining whether the first output power satisfies a power output requirement; if the first output power satisfies the power output requirement, directly outputting the first output power; the power output requirement is that the first output power is higher than a maximum output power or is lower than 0;or,

S421: if the first output power does not satisfy the power output requirement, in a case where the first output power is higher than the maximum output power, determining the reference voltage according to a first reference voltage calculation formula, and determining the second output power as the maximum output power; or

S422: in a case where the first output power is lower than 0, determining the reference voltage according to a second reference voltage calculation formula, and determining the second output power as 0;

the output power calculation formula is:

$$P_{out}=k\times(P_{now}-(V_{ref}{}^2-V_{now}{}^2)\times\frac{C}{T})$$

where, $P_{out}$ is the first output power, $V_{now}$ is the photovoltaic-side voltage in the current calculation period, $C$ is a photovoltaic-side input capacitance, $T$ is the calculation period, $k$ is the power compensation factor, $P_{now}$ is a power in the current calculation period, and $V_{ref}$ is the reference voltage;

the first reference voltage calculation formula is:

$$V_{ref}=\sqrt{V_{now}{}^2-(\frac{P_{max}}{k}-P_{now})\times\frac{T}{C}}$$

where, $V_{now}$ is the photovoltaic-side voltage in the current calculation period, $C$ is the photovoltaic-side input capacitance, $T$ is the calculation period, $k$ is the power compensation factor, $P_{now}$ is the power in the current calculation period, $P_{max}$ is the maximum output power, and $V_{ref}$ is the reference voltage;

the second reference voltage calculation formula is:

$$V_{ref}=\sqrt{V_{now}{}^2+P_{now}\times\frac{T}{C}}$$

where, $V_{now}$ is the photovoltaic-side voltage in the current calculation period, $C$ is the photovoltaic-side input capacitance, $T$ is the calculation period, $P_{now}$ is the power in the current calculation period, and $V_{ref}$ is the reference voltage.

2. A quick MPPT system based on a unipolar inverter circuit, **characterized in that**, comprising a unipolar inverter circuit and a controller, the controller implements the quick MPPT method based on a unipolar inverter circuit according to claim 1.

3. A quick MPPT device based on a unipolar inverter circuit, **characterized in that**, comprising

a memory storing executable program codes; and
a processor coupled with the memory;
wherein, the processor invokes the executable program codes stored in the memory to implement the quick MPPT method based on a unipolar inverter circuit according to claim 1.

**Patentansprüche**

1. Schnelles MPPT-Verfahren auf Grundlage einer einpoligen Wechselrichterschaltung, **gekennzeichnet durch** folgende Schritte:

S1: Initialisieren von MPPT-Steuerparametern; wobei die MPPT-Steuerparameter eine Referenzspannung $V_{ref}$ der Fotovoltaikseite und einen Leistungskoeffizienten $k$ umfassen;
S2: Auslösen eines Abtastungsvorgangs, wenn eine Abtastbedingung in jeder Berechnungsperiode erfüllt ist, und Aufzeichnen von Daten der Fotovoltaikseite in einer aktuellen Berechnungsperiode; wobei die Abtastbedingung lautet, dass die Netzphase ein ganzzahliges Vielfaches von 45° ist; und wobei die Daten der Fotovoltaikseite eine Spannung $V_{now}$ der Fotovoltaikseite und oder eine Leistung $P_{now}$ umfassen; wobei die Berechnungsperiode ein Halbzyklus der Netzspannung ist;
S3: wenn eine Netzphase eine Berechnungsbedingung erfüllt, Vergleichen mittels Berechnung einer Spannung in der aktuellen Berechnungsperiode mit einer Spannung in einer vorhergehenden Berechnungsperiode und Bestimmen eines Leistungskompensationsfaktors gemäß einem Vergleichsergebnis; wobei die Berechnungsbedingung lautet, dass die Netzphase 0° und/oder 180° ist; falls eine Spannung $V_{now}$ der Fotovoltaikseite in der aktuellen Berechnungsperiode niedriger als eine Referenzspannung in der vorhergehenden Periode ist, Einstellen des Leistungskompensationsfaktors als einen ersten Leistungskompensationsfaktor; oder
wenn die Spannung in der aktuellen Berechnungsperiode höher als die Referenzspannung in der vorhergehenden Periode ist, Einstellen des Leistungskompensationsfaktors als einen zweiten Leistungskompensationsfaktor, wobei der erste Leistungskompensationsfaktors kleiner als der zweite Leistungskompensationsfaktor ist; und

S4: Bestimmen einer Ausgangsleistung und/oder einer Referenzspannung gemäß dem Leistungskompensationsfaktor und einer Leistungsberechnungsstrategie, und Steuern einer Wechselrichterleistung in der aktuellen Berechnungsperiode gemäß der Ausgangsleistung; wobei der Schritt des Bestimmens einer Ausgangsleistung und/oder einer Referenzspannung gemäß dem Leistungskompensationsfaktor und einer Leistungsberechnungsstrategie umfasst:

S41: Einstellen der Referenzspannung als eine Spannung, die einem Maximalleistungspunkt von je vier Abtastpunkten entspricht, und Berechnen einer ersten Ausgangsleistung gemäß einer Ausgangsleistungsberechnungsformel; und
S42: Bestimmen, ob die erste Ausgangsleistung eine Leistungsabgabeanforderung erfüllt; wenn die erste Ausgangsleistung die Leistungsabgabeanforderung, unmittelbares Ausgeben der ersten Ausgangsleistung; wobei die Leistungsabgabeanforderung lautet, dass die erste Ausgangsleistung höher als eine maximale Ausgangsleistung oder niedriger als 0 ist; oder
S421: wenn die erste Ausgangsleistung die Leistungsabgabeanforderung nicht erfüllt und die erste Ausgangsleistung höher als die maximale Ausgangsleistung ist, Bestimmen der Referenzspannung gemäß einer ersten Referenzspannungsberechnungsformel und Bestimmen der zweiten Ausgangsleistung als die maximale Ausgangsleistung; oder
S422: falls die erste Ausgangsleistung niedriger als 0 ist, Bestimmen der Referenzspannung gemäß einer zweiten Referenzspannungsberechnungsformel und Bestimmen der zweiten Ausgangsleistung als 0;
wobei die Ausgangsleistungsberechnungsformel lautet:

$$P_{out} = k \times \left( P_{now} - (V_{ref}^2 - V_{now}^2) \times \frac{C}{T} \right)$$

wobei $P_{out}$ die erste Ausgangsleistung ist, $V_{now}$ die Spannung der Fotovoltaikseite in der aktuellen Berechnungsperiode ist, C eine Eingangskapazität der Fotovoltaikseite ist, $T$ die Berechnungsperiode ist, $k$ der Leistungskompensationsfaktor ist, $P_{now}$ eine Leistung in der aktuellen Berechnungsperiode ist und $V_{ref}$ die Bezugsspannung ist;

wobei die erste Referenzspannungsberechnungsformel lautet:

$$V_{ref} = \sqrt{V_{now}^2 - \left(\frac{P_{max}}{k} - P_{now}\right) \times \frac{T}{C}}$$

wobei $V_{now}$ die Spannung der Fotovoltaikseite in der aktuellen Berechnungsperiode ist, C die Eingangskapazität der Fotovoltaikseite ist, $T$ die Berechnungsperiode ist, $k$ der Leistungskompensationsfaktor ist, $P_{now}$ die Leistung in der aktuellen Berechnungsperiode ist, $P_{max}$ die maximale Ausgangsleistung ist und $V_{ref}$ die Bezugsspannung ist;

wobei die zweite Referenzspannungsberechnungsformel lautet:

$$V_{ref} = \sqrt{V_{now}^2 + P_{now} \times \frac{T}{C}}$$

wobei $V_{now}$ die Spannung der Fotovoltaikseite in der aktuellen Berechnungsperiode ist, C die Eingangskapazität der Fotovoltaikseite ist, $T$ die Berechnungsperiode ist, $P_{now}$ die Leistung in der aktuellen Berechnungsperiode ist und $V_{ref}$ die Bezugsspannung ist.

2. Schnelles MPPT-System auf Grundlage einer einpoligen Wechselrichterschaltung, **dadurch gekennzeichnet, dass** es eine einpolige Wechselrichterschaltung und eine Steuereinrichtung umfasst, wobei die Steuereinrichtung ein schnelles MPPT-Verfahren auf Grundlage einer einpoligen Wechselrichterschaltung nach Anspruch 1 implementiert.

3. Schnelle MPPT-Vorrichtung auf Grundlage einer einpoligen Wechselrichterschaltung, **gekennzeichnet durch**:

einen Speicher, in dem ausführbarer Programmcode gespeichert ist; und
einen Prozessor, der an den Speicher gekoppelt ist;
wobei der Prozessor den ausführbaren Programmcode, der in dem Speicher gespeichert ist, aufruft, um das schnelle MPPT-Verfahren auf Grundlage einer einpoligen Wechselrichterschaltung nach Anspruch 1 zu implementieren.

## Revendications

1. Procédé MPPT rapide basé sur un circuit onduleur unipolaire, **caractérisé en ce qu'**il comprend les étapes suivantes :

S1 : initialisation des paramètres de commande MPPT ; les paramètres de commande MPPT comprennent une tension de référence $V_{ref}$ côté photovoltaïque et un coefficient de puissance $k$ ;
S2 : déclenchement d'une opération d'échantillonnage lorsqu'une condition d'échantillonnage est remplie à chaque période de calcul, et enregistrement des données côté photovoltaïque dans une période de calcul actuelle ; la condition d'échantillonnage est que la phase de la grille est un multiple intégral de 45° ; et les données côté photovoltaïque comprennent une tension $V_{now}$ côté photovoltaïque et/ou une puissance $P_{now}$ ; la période de calcul est un cycle de demi-onde de la tension de grille ;
S3 : lorsqu'une phase de grille satisfait une condition de calcul, comparaison par calcul d'une tension de la période de calcul du courant avec une tension d'une période de calcul précédente, et détermination d'un facteur de compensation de puissance selon un résultat de comparaison ; la condition de calcul est que la phase de la grille soit de 0° et/ou 180° ; dans le cas où une tension $V_{now}$ côté photovoltaïque dans la période de calcul du courant est inférieure à une tension de référence de la période précédente, fixation du facteur de compensation de puissance comme un premier facteur de compensation de puissance ; ou
dans le cas où la tension dans la période de calcul du courant est supérieure à la tension de référence de la période précédente, fixation du facteur de compensation de puissance comme un second facteur de compensation de puissance, dans lequel le premier facteur de compensation de puissance est inférieur au deuxième facteur de compensation de puissance ; et
S4 : détermination d'une puissance de sortie et/ou d'une tension de référence selon le facteur de compensation de puissance et une stratégie de calcul de puissance, et contrôle de la puissance d'un onduleur pendant la période de calcul du courant selon la puissance de sortie ;
l'étape de la détermination d'une puissance de sortie et/ou d'une tension de référence selon le facteur de compensation de puissance et une stratégie de calcul de puissance comprend :

S41 : définition de la tension de référence comme une tension correspondant à un point de puissance maximale tous les quatre points d'échantillonnage, et calcul d'une première puissance de sortie selon une formule de calcul de la puissance de sortie ; et

S42 : détermination si la première puissance de sortie satisfait une exigence de puissance ; si la première puissance de sortie satisfait l'exigence de puissance, envoi direct de la première puissance de sortie ; l'exigence de puissance de sortie est que la première puissance de sortie soit supérieure à une puissance maximale ou inférieure à 0 ; ou,

S421 : si la première puissance de sortie ne satisfait pas l'exigence de puissance, dans le cas où la première puissance de sortie est supérieure à la puissance de sortie maximale, détermination de la tension de référence selon une première formule de calcul de la tension de référence, et détermination de la deuxième puissance de sortie comme puissance maximale ; ou

S422 : dans le cas où la première puissance de sortie est inférieure à 0, détermination de la tension de référence selon une deuxième formule de calcul de la tension de référence, et détermination de la deuxième puissance de sortie comme étant 0 ;

la formule de calcul de la puissance de sortie est la suivante :

$$P_{out} = k \times \left( P_{now} - (V_{ref}^2 - V_{now}^2) \times \frac{C}{T} \right)$$

où $P_{out}$ est la première puissance de sortie, $V_{now}$ est la tension côté photovoltaïque dans la période de calcul du courant, $C$ est une capacitance d'entrée côté photovoltaïque, $T$ est la période de calcul, $k$ est le facteur de compensation de puissance, $P_{now}$ est une puissance dans la période de calcul du courant, et $V_{ref}$ est la tension de référence ;

la formule de calcul de la première tension de référence est la suivante :

$$V_{ref} = \sqrt{V_{now}^2 - \left( \frac{P_{max}}{k} - P_{now} \right) \times \frac{T}{C}}$$

où $V_{now}$ est la tension côté photovoltaïque dans la période de calcul du courant, $C$ est la capacitance d'entrée côté photovoltaïque, $T$ est la période de calcul, $k$ est le facteur de compensation de puissance, $P_{now}$ est la puissance dans la période de calcul actuel, $Pmax$ est la puissance de sortie maximale, et $V_{ref}$ est la tension de référence ;

la formule de calcul de la deuxième tension de référence est la suivante :

$$V_{ref} = \sqrt{V_{now}^2 + P_{now} \times \frac{T}{C}}$$

où $V_{now}$ est la tension côté photovoltaïque dans la période de calcul du courant, $C$ est la capacitance d'entrée côté photovoltaïque, $T$ est la période de calcul, $P_{now}$ est la puissance dans la période de calcul du courant, et $V_{ref}$ est la tension de référence.

2. Système MPPT rapide basé sur un circuit onduleur unipolaire, **caractérisé en ce qu'**il comprend un circuit onduleur unipolaire et un contrôleur, le contrôleur implémente le procédé MPPT rapide basé sur un circuit onduleur unipolaire selon la revendication 1.

3. Dispositif MPPT rapide basé sur un circuit onduleur unipolaire, **caractérisé en ce qu'**il comprend :

une mémoire stockant des codes de programme exécutables ; et
un processeur couplé à la mémoire ;
dans lequel le processeur invoque les codes de programme exécutables stockés en mémoire pour implémenter le procédé MPPT rapide basé sur un circuit onduleur unipolaire selon la revendication 1.

FIG. 1

FIG. 2

Start

Initialize controller parameters, and reasonably set Vref

Perform sampling when the grid phase is an integral multiple of 45°, and record a photovoltaic-side voltage and power

The grid phase is 0° or 180°   No

The current voltage $V_{now} < V_{ref}$?   Yes   No

k=k*0.99   k=k*1.01

Update the voltage corresponding to a maximum power point to Vref

Output power
$$P_{out} = k \times (P_{now} - (V_{ref}^{\ 2} - V_{now}^{\ 2}) \times \frac{C}{T})$$

$P_{out} < P_{max}$?

$$V_{ref} = \sqrt{V_{now}^{\ 2} - (\frac{P_{max}}{k} - P_{now}) \times \frac{T}{C}}$$
$$P_{out} = P_{max}$$

$P_{out} > 0$?

$$V_{ref} = \sqrt{V_{now}^{\ 2} + P_{now} \times \frac{T}{C}}$$
$$P_{out} = 0$$

Output the power according to Pout

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115693776 A

- CN 108448638